# EUROPÄISCHE PATENTSCHRIFT

(11) **EP 1 916 545 B1**
(45) Veröffentlichungstag und Bekanntmachung des Hinweises auf die Patenterteilung: **09.02.2011**
(21) Anmeldenummer: 07020732.9
(22) Anmeldetag: 23.10.2007
(51) Int. Cl.: G01V 8/14

(54) **Optoelektronischer Sensor und Verfahren zu dessen Betrieb**
Opto-electronic sensor and method for its operation
Capteur optoélectronique et son procédé de fonctionnement

(30) Priorität: 23.10.2006 DE 102006049905
(43) Veröffentlichungstag der Anmeldung: 30.04.2008
(73) Patentinhaber: Pepperl + Fuchs GmbH, 68307 Mannheim (DE)
(72) Erfinder: Lindenthal, Hartmut, 12099 Berlin (DE); Lucy, Marian, 14129 Berlin (DE)
(74) Vertreter: Schiffer, Axel Martin

(56) Entgegenhaltungen:
- DE-A1- 10 202 305
- DE-A1- 10 231 178
- DE-A1- 19 708 083
- DE-A1- 19 721 105
- US-B1- 6 384 403

## Beschreibung

Die vorliegende Erfindung bezieht sich in einem ersten Aspekt auf einen optoelektronischen Sensor nach dem Oberbegriff des Anspruchs 1.

In einem weiteren Aspekt bezieht sich die Erfindung auf ein Verfahren zum Betrieb eines optoelektronischen Sensors nach dem Oberbegriff des Anspruchs 12.

Ein gattungsgemäßer Sensor ist beispielsweise in DE 199 07 547 B4 beschrieben und weist eine Strahlungsquelle zum Aussenden von Licht in einen Überwachungsbereich sowie einen Detektor zum Nachweis von von einem nachzuweisenden Zielobjekt und/oder einem Reflektor reflektiertem und/oder gestreutem Licht auf.

Bei einem gattungsgemäßen Verfahren sendet eine Strahlungsquelle Licht in einen Überwachungsbereich aus und von einem nachzuweisenden Zielobjekt und/oder einem Reflektor reflektiertes und/oder gestreutes Licht wird von einem Detektor nachgewiesen.

Optische Sensoren beinhalten üblicherweise einen Sende- und/einen Empfangskanal. Diese können entweder getrennt nebeneinander, also mit getrennten optischen Achsen oder koaxial, das heißt mit einer gemeinsamen optischen Achse, angeordnet sein. Ein optischer Sende- oder Empfangskanal besteht im einfachsten Fall aus einer Linse, einem Tubus zur Vermeidung von störenden Reflexionen oder optischen Überkopplungen, einer Blende zur Definition der Öffnungswinkel und zur Unterdrückung von Streulicht sowie einem dahinter angeordneten Sende- beziehungsweise Empfangselement.

Die Anordnung der Komponenten im Empfangskanal bestimmt im Wesentlichen den Erfassungsbereich und den Öffnungswinkel eines optischen Sensors. Die präzise Anordnung dieser Komponenten entscheidet über die Leistungsfähigkeit der optischen Konfiguration. Blendenposition, Blendengröße und Blendengestalt stellen dabei meist einen Kompromiss aus einem möglichen Einstellbereich einerseits und der Unterdrückung von Störeinflüssen andererseits dar.

Als Störeinflüsse kommen Umgebungslicht durch direkte oder indirekte Sonneneinstrahlung, Umgebungslicht durch künstliche Beleuchtung, beispielsweise frequenzmodulierte Leuchtstofflampen, optische Störungen durch benachbarte optische Sensoren und schließlich auch reflektiertes oder eingespiegeltes Licht von hochreflektiven Gegenständen am Rand des Erfassungsbereichs in Betracht.

Bei Reflexionslichtschranken mit getrennter Sende- und Empfangsoptik werden die Blendenposition und die Blendengröße so gewählt, dass der gesamte Lichtfleck aus dem Fernfeld ohne Beschneidung auf das Empfangselement trifft und damit die maximale optische Energie für die Signalbewertung zur Verfügung steht. Der von einem diffus reflektierenden Objekt im Nahbereich resultierende Lichtfleck wird dagegen so stark durch die Blende beschnitten, dass das Signal auf dem Empfänger unterhalb der Schaltschwelle bleibt oder die Schaltschwelle so hoch gewählt werden muss, dass ein solches Objekt nicht erkannt werden kann.

Ein Lichttaster, der nach dem Triangulationsprinzip arbeitet, besitzt wegen des Wegs, den ein Lichtfleck über einen großen Tastweitenbereich auf dem Empfangselement zurücklegt, eine längliche Blende. Um der vom Objektabstand abhängigen Energie Rechnung zu tragen, kann die Blende so strukturiert sein, dass ein Lichtfleck aus dem Fernfeld oder im Schaltpunkt nicht begrenzt wird, ein Lichtfleck aus dem Nahbereich aber seitlich stark abgeblendet wird. Dadurch wird der laterale Öffnungswinkel im Nahbereich reduziert.

Mit ein- oder zweidimensionalen Empfängeranordnungen wie zum Beispiel Kamera-Chips lässt sich eine Blendenwirkung dadurch erzielen, dass abzublendende Bereiche nicht ausgelesen werden, beziehungsweise die Werte dieser Empfängerelemente in einer späteren Bewertung ignoriert werden, Solche Lösungen erfordern die Bewertung einer Vielzahl einzelner Empfangselemente und somit eine sehr aufwändige Auswertung.

In DE 199 07 547 B4 wird eine Anordnung von Empfangselementen gezeigt, die in ihrer Breite und Länge den typischen Gegebenheiten des Lichtfleckverlaufs und der Lichtfleckgröße bei Triangulationssensoren entspricht. Diese Anordnung stellt jedoch eine unveränderliche Konfiguration dar und lässt keine dynamische Veränderung der Empfangselementausdehnung zu.

In DE 296 09 523 U1 ist eine Anordnung beschrieben, bei der eine Blende direkt auf der Oberfläche eines Empfangselements angebracht ist. Die Blendenstruktur ist aber auch hier statisch und kann nicht verändert werden.

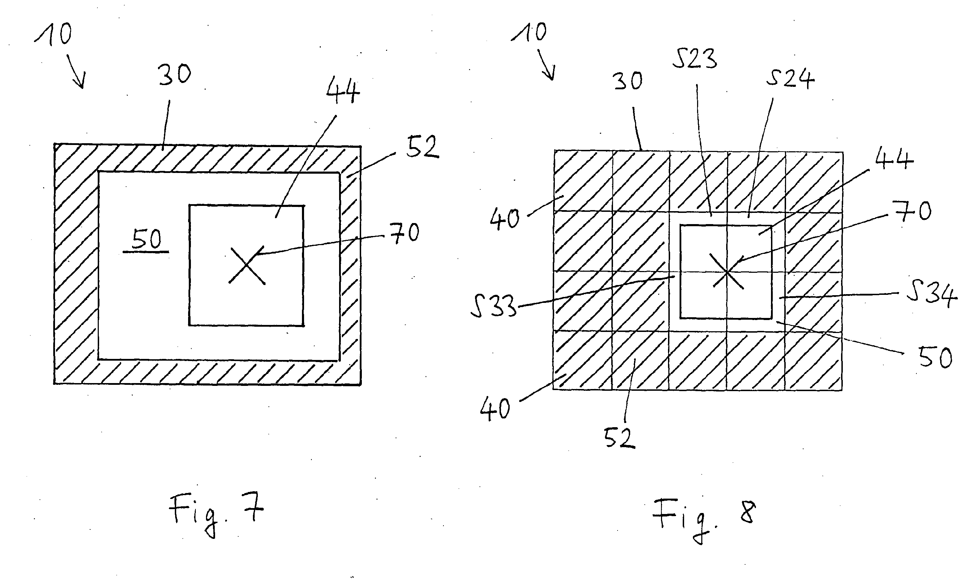

Durch die feste Anordnung der optischen Komponenten ist die Blendenöffnung aufgrund von mechanischen Toleranzen meist größer gestaltet als optisch notwendig. Damit ist auch der Öffnungswinkel des Empfangskanals beispielsweise bei Reflexionslichtschranken größer als für das Sensorsignal oder das Nutzsignal notwendig. Dies ist in Figur 7 veranschaulicht. Dort ist schematisch ein Detektor 10 mit einer rechteckigen Detektorgrundfläche 30 sowie außerdem ein Lichtfleck 44 mit einer optischen Achse 70 dargestellt. Eine aktive Fläche 50 ist deutlich größer als die Ausdehnung des Lichtflecks 44, was sich nachteilig auf das Nutz-Störsignal-Verhältnis auswirkt, da der Erfassungsbereich für die oben beschriebenen optischen Störsignale dadurch vergrößert ist. Schraffiert ist ein nicht aktiver Bereich 52 des Detektors 10 dargestellt, der beispielsweise von einer Blende abgedeckt sein kann.

Die Blende ist bisher meist für eine bestimmte Reflektorgröße und einen bestimmten Reflektorabstand dimensioniert. Bei Verwendung eines kleineren Reflektors besteht bei bekannten Sensoren keine Möglichkeit, den nunmehr kleineren erforderlichen Öffnungswinkel des Empfangskanals anzupassen und damit das Verhältnis von Nutz- zu Störsignal zu verbessern.

Die Blende ist zumeist oberhalb der Empfangsfläche angeordnet. Bei Systemen, bei denen eine Fokussierung auf die Empfangsfläche erfolgt, wird eine weitere Aufweitung der Blende notwendig, um den Strahlengang nicht unnötig zu beschneiden.

Für einen Lichttaster, der einen großen Erfassungsbereich besitzt bis hin zur Erkennung eines schwach diffus reflektierenden Objekts unmittelbar vor dem Sensor, ergibt sich durch die Triangulation des Lichtflecks eine sehr große langgezogene Blendenöffnung. Bei einem Lichttaster mit sogenannter mechanischer Hintergrundausblendung ändert sich bei Veränderung der Tastweite zwar meistens der Öffnungswinkel, die Blendenöffnung bleibt aber unabhängig von der Tastweite unverändert.

Bei einem Lichttaster mit sogenannter elektronischer Hintergrundausblendung oder allgemein elektronischer Tastweiteneinstellung ist die notwendige Blende so groß, dass über den gesamten Erfassungsbereich ausreichend Energie für eine Signalbewertung vorhanden ist. Da hier keine mechanische Veränderung der Blendenposition oder, etwa durch bewegte Linsen, des Öffnungswinkels erfolgt, ist der Öffnungswinkel für optische Störgrößen sehr viel größer als für das Nutzsignal in einem bestimmten Abstand erforderlich.

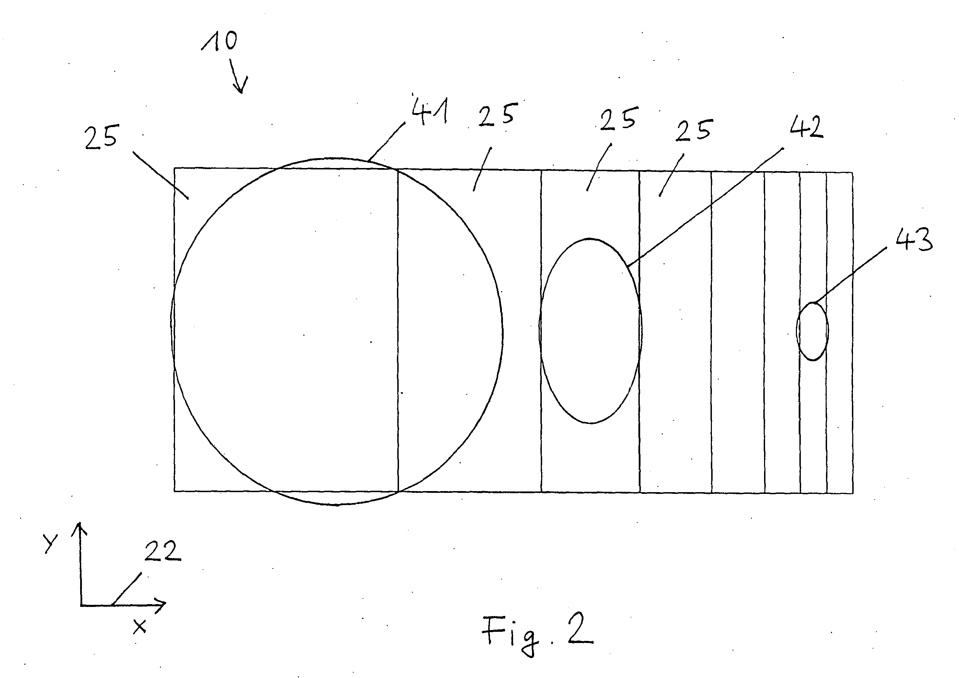

Dies wird näher mit Bezug auf Figur 2 erläutert. Hierin ist ein segmentierter Detektor 10 aus dem Stand der Technik darm gestellt. Ein Koordinatensystem 22 ist schematisch angedeutet. Mit einem Kreis 41 wird ein Lichtfleck, der von Reflexion oder Streuung eines sehr nah vor dem Sensor befindlichen Objekts resultiert. Ein etwas weiter entferntes Objekt führt zu einem Lichtfleck 42, der in der Darstellung in Fig. 2 auf dem Detektor 10 bereits etwas nach rechts, also in x-Richtung, gewandert ist. Ein sehr weit entferntes Objekt führt schließlich zu einem nunmehr sehr kleinen Lichtfleck 43 am rechten Rand des Detektors 10 in Figur 2. Durch die Segmentierung des Detektors 10 in einzelne Detektorsegmente 25 kann, wie aus Figur 2 ersichtlich, bereits eine gewisse Anpassung an die Lichtfleckgröße erzielt werden. Allerdings ist der Öffnungswinkel im rechten Bereich in Figur 2, also für das Fernfeld, viel größer als für den Lichtfleck erforderlich, was sich nachteilig auf das Nutz-Störsignal-Verhältnis auswirkt.

Das Nutz-Störsignal-verhältnis ist deshalb bei einem solchen Lichttaster relativ gering. Systemfremde optische Störgrößen, wie Umgebungslicht, müssen durch teure optische Filtermaßnahmen auf ein geringeres Maß reduziert werden.

Systemeigene Einflüsse, wie eine Einspiegelung durch ein hochreflektives Objekt, das innerhalb des Erfassungsbereichs oder des öffnungswinkels des Empfängers liegt, können durch Blenden nur unzureichend unterdrückt werden. Hierzu können Zusatzmaßnahmen, wie Plausibilitätsüberprüfungen, die beispielsweise in DE 20 2006 00384 U1 und DE 10 059 156 A1 beschrieben sind, durchgeführt werden.

In US-6,384,403 ist eine bichromatische optische Zelle beschrieben, bei der mit Hilfe von zwei Lichtquellen Licht unterschiedlicher Wellenlänge in einen Überwachungsbereich gestrahlt werden kann. Weiterhin ist ein Empfangselement mit einer veränderlichen optischen Empfangsfläche vorhanden.

In DE 102 31 178 A1 ist ein gattungsgemäßer optoelektronischer Sensor beschrieben, bei dem für eine mehrstufige Auswertung der Empfangssignale in einer Mehrzahl von Empfangselementen mehrere Verarbeitungseinrichtungen und mindestens eine Auswertung vorgesehen sind. Den Verarbeitungseinrichtungen sind jeweils mehrere Empfangselemente zugeordnet, so dass die Anzahl der Verarbeitungseinrichtungen insgesamt kleiner ist als die Zahl der Empfangselemente. Um im Hinblick auf mechanische Fehlpositionierungen eine Einstellbarkeit bereitzustellen, kann eine Mehrzahl von Detektorsegmenten zu einer aktiven Flächen zusammengeschaltet werden und für eine Auswertung können nur die Empfangssignale der jeweils aktivierten Empfangselemente berücksichtigt werden.

Eine **Aufgabe** der Erfindung ist es, einen Sensor der genannten Art zu schaffen und ein Verfahren anzugeben, bei welchen das Nutz- zu Störsignal-Verhältnis verbessert wird und außerdem ein unaufwändiger Betrieb gewährleistet ist.

Diese Aufgabe wird in einem ersten Aspekt der Erfindung durch den optoelektronischen Sensor mit den Merkmalen des Anspruchs 1 gelöst.

In einem weiteren Aspekt der Erfindung wird die Aufgabe durch das Verfahren mit den Merkmalen des Anspruchs 12 gelöst.

Bevorzugte Varianten des erfindungsgemäßen Verfahrens sowie vorteilhafte Ausführungsbeispiele des erfindungsgemäßen optoelektronischen Sensors sind Gegenstand der abhängigen Ansprüche.

Der optoelektronische Sensor der oben genannten Art ist erfindungsgemäß dadurch weitergebildet, dass der Detektor eine aktive Fläche aufweist, deren Position und zweidimensionale Form innerhalb einer Detektorgrundfläche gezielt einstellbar ist und dass vom Detektor ein über die aktive Fläche integriertes Nachweissignal ausgebbar ist.

Das Verfahren der oben genannten Art ist erfindungsgemäß dadurch gekennzeichnet, dass eine Position und eine zweidimensionale Form einer aktiven Fläche des Detektors innerhalb einer Detektorgrundfläche gezielt eingestellt wird und dass der Detektor ein über die aktive Fläche integriertes Nachweissignal ausgibt.

Ein erster Grundaspekt der Erfindung kann in der Erkenntnis gesehen werden, dass die variable Größe und Position eines Leuchtflecks auf dem Detektor bei statischer Konfiguration des Detektors zu erheblichen Einbußen beim Nutz-Störsignal-Verhältnis .führt.

Ein weiterer Grundaspekt der Erfindung ist sodann in der Erkenntnis zu sehen, dass eine Aufteilung der Detektorfläche in einzelne Segmente zwar möglich ist, dass deren separates Auslesen aber einen erheblichen technischen Aufwand nach sich zieht.

Ein Kerngedanke der Erfindung besteht somit darin, den Detektor so zu gestalten, dass eine aktive Fläche innerhalb einer Detektorgrundfläche in ihrer zweidimensionalen Form und ihrer Position gezielt eingestellt werden kann.

Auf diese Weise kann eine präzise Anpassung der aktiven Fläche auf die jeweilige Messsituation durchgeführt werden.

Für einen breiten Bereich von optischen Sensoren stellt eine solche veränderliche Blendenkonfiguration im Empfangskanal eine Möglichkeit dar, die Leistungsfähigkeit eines Sensors der aktuellen Anwendung entsprechend zu optimieren. Dieser Vorteil ergibt sich maßgeblich aus der Anpassung des Öffnungswinkels auf den durch das Nutzsignal, also das Sensorsignal erforderlichen Bereich und der dadurch erzielten Verbesserung des Nutz-Störsignal-Verhältnisses.

Ein weiterer Kerngedanke der Erfindung kann darin gesehen werden, den Detektor so zu gestalten und auszubilden, dass ein über die aktive Fläche des Detektors integriertes Nachweissignal ausgegeben wird. Der Aufwand zum Auslesen der Detektorsignale wird somit erheblich reduziert, da im Wesentlichen nur noch ein einziges Nachweissignal ausgelesen und weiterverarbeitet werden muss.

Der Vorteil gegenüber der Verwendung eines Mehrelement-Empfängers besteht dann darin, dass die einzelnen Segmente einer gemeinsamen Fläche zugeordnet werden und diese Anordnung wie ein einzelnes Empfangselement betrieben werden kann. Damit ist eine erheblich schnellere Signalbewertung möglich als beim separaten Auslesen und Bewerten einzelner Segmente,

Eine solche variable Blendenanordnung, die auch als elektronische Blende bezeichnet werden kann, erfolgt sinnvollerweise direkt im Empfangselement oder direkt in oder unmittelbar auf der lichtempfindlichen Fläche.

Bei dem erfindungsgemäßen optoelektronischen Sensor ist demnach der Detektor aus einzelnen schaltungstechnisch aktivierbaren Bestandteilen aufgebaut, die in ihrer Gesamtheit eine Detektorgrundfläche des Detektors bilden. Aus den einzelnen Bestandteilen, die auch als Detektorsegmente bezeichnet werden, kann eine zusammenhängende zweidimensionale Empfängerfläche innerhalb der Detektorgrundfläche gebildet werden. Aufgrund der erfindungsgemäß vorhandenen Verschaltungsmöglichkeiten kann diese zweidimensionale Empfängerfläche beliebig innerhalb der Detektorgrundfläche dimensioniert und positioniert werden.

Erfindungsgemäß weist der Detektor eine Mehrzahl von Detektorsegmenten sowie zugeordnete Schaltelemente zum gezielten Zusammenschalten der Detektorsegmente zur aktiven Fläche auf.

Durch die erfindungsgemäße zweidimensionale Segmentierung des Empfängers werden also Bereiche geschaffen, die variabel zur Empfangsfläche zugeordnet werden können. Die Einstellung erfolgt über Steuersignale, wobei die einzelnen Segmente komplett von der Empfangsfläche weggeschaltet werden.

Zusätzlich kann auch zum Einstellen der aktiven Fläche unmittelbar vor der Detektorgrundfläche eine elektronisch steuerbare Blende vorhanden sein. Hierbei kann es sich beispielsweise um eine Blende aus einem LCD-Element handeln. Es werden dann einzelne Detektorsegmente durch Abdecken gezielt inaktiv gestellt.

Der Detektor mit der Mehrzahl von Detektorsegmenten und den zugeordneten Schaltelementen kann beispielsweise in CMOS-Technologie gefertigt sein.

Besonders bevorzugt werden die Schaltelemente auf oder an demselben Chip wie die Detektorsegmente, insbesondere monolithisch, angeordnet. Hierdurch kann ein besonders kompakter Aufbau und ein besonders schnelles Bauelement erreicht werden, welches eine besonders schnelle Reaktion und Verstellung des Detektors ermöglicht.

Bei einer einfachen Variante weist der Detektor eine rechteckige Detektorgrundfläche auf, wobei es insbesondere für Anwendungen als Triangulationssensor zweckmäßig ist, wenn die Detektorsegmente unterschiedlich groß sind. Hierbei können die Detektorsegmente insbesondere in einem rechtwinkligen Raster angeordnet sein. Eine besonders gute Einstellung von Position und Form der aktiven Fläche für Triangulationsanwendungen ist möglich, wenn die Detektorsegmente für den Bereich eines Fernfelds dichter gerastert sind als für den Bereich eines Nahfelds.

Für den Einsatz des erfindungsgemäßen Sensors als Reflexionslichtschranke oder als Reflexionslichttaster kann es aber auch zweckmäßig sein, wenn die Detektorsegmente in einem schachbrettartigen Raster gebildet sind.

Wiederum im Hinblick auf Anwendungen als Triangulationssensor sind die Detektorsegmente bezüglich einer Mittenachse des Detektors symmetrisch unterteilt. Eine zunehmende Höhe der aktiven Fläche der einzelnen Segmente wird mit einfachen Mitteln dadurch erreicht, dass die Detektorsegmente, die einander bezüglich der Mittenachse des Detektors symmetrisch entsprechen, jeweils paarweise zusammengeschaltet werden.

Wenn beispielsweise der Detektor eine im Wesentlichen rechteckförmige Grundfläche aufweist und die Richtung der Mittenachse als x-Richtung bezeichnet wird, kann der Detektor zunächst in x-Richtung in Segmente unterschiedlicher Breite, also unterschiedlicher Ausdehnung in x-Richtung unterteilt werden. Darüber hinaus ist der Detektor auch in y-Richtung, also in einer zu x-Richtung senkrechten Richtung, unterteilt oder segmentiert. Bevorzugt wird, wie vorstehend beschrieben, diese Unterteilung so gewählt, dass die Detektorsegmente bezüglich der Mittenachse des Detektors symmetrisch unterteilt sind, dass also der Detektor im Wesentlichen spiegelsymmetrisch zur Mittenachse aufgebaut ist.

Aus geometrischen Gründen wird dabei außerdem erfindungsgemäß eine Segmenthöhe der Detektorsegmente mit zunehmendem Abstand zu einer Mittenachse größer.

Eine noch präzisere Einstellung des Detektors kann realisiert werden, wenn die Detektorsegmente in Richtung der Mittenachse jeweils in eine Mehrzahl von Untersegmenten unterteilt sind. Der Verschaltungsaufwand kann dabei in Grenzen gehalten werden, wenn alle Untersegmente eines Detektorsegments dieselbe Segmenthöhe aufweisen.

Auch bei Reflexionslichttastern oder Reflexionslichtschranken kann der erfindungsgemäße optoelektronische Sensor mit Erfolg eingesetzt werden. Reflexionslichttaster oder Reflexionslichtschranken, bei denen auch praktisch direkt vor der Optik befindliche Objekte erkannt werden, können realisiert werden, wenn eine Sendeoptik und eine Empfangsoptik gemeinsame optische Komponenten aufweisen, beispielsweise als Teil einer Autokollimationsoptik, und ein Strahlteiler zum Trennen eines Sendestrahlengangs und eines Detektorstrahlengangs vorhanden ist.

Bei einer besonders bevorzugten Variante des erfindungsgemäßen Verfahrens wird für den Einsatz des Sensors als Triangulationssensor durch gezielte Wahl von Form und Position, insbesondere auch der Höhe, der aktiven Fläche des Detektors, eine Tastweite eingestellt.

Lichttaster nach dem Triangulationsprinzip sind in den Schriften DE 197 21 105 C2, DE 199 07 547 B4 und DE 10 001 017 B4 beschrieben, wobei der Empfänger in mehrere Bereiche unterteilt wird und die Bereiche variabel Sensorbereichen zugeordnet werden können. Eine elektronische Blende kann in solchen Array-Anordnungen dazu dienen, für einen gewählten Tastabstand die einzelnen Sensorelemente in ihrer Höhe an die jeweils resultierende Lichtfleckgeometrie auf dem Empfänger optimal anzupassen. Dabei werden die bei solchen Anordnungen typischen großen Störlichtpegel deutlich reduziert.

Weiterhin kann mit Hilfe des erfindungsgemäßen Verfahrens für den Einsatz des Sensors bei einer Reflexionslichtschranke durch gezielte Wahl von Form und Position der aktiven Fläche des Detektors die Optik für einen bestimmten Abstand des Reflektors eingestellt werden. Bei Reflexionslichtschranken tritt in der Anwendung der Fall auf, dass ein Reflektor oder eine Reflektorfolie im Fern- als auch im Nahbereich positioniert werden soll. Für den Fernbereich ist die Blende meist zentrisch zur optischen Achse des Empfängers optimal angeordnet. Im Nahbereich kann der Lichtfleck auf dem Empfänger wandern und die Blendenposition und -große muss angepasst werden. Damit kann der Sensor variabel für unterschiedliche Reflektorabstände optimal eingestellt werden.

Besonders im extremen Nahbereich tritt bei konventionellen Tripel-Reflektoren in Zusammenhang mit einer kleinen Blende häufig ein sogenanntes Tripel-Knattern auf. Dieses resultiert daraus, dass nur noch einzelne Tripel im Öffnungswinkel des Empfängers liegen und die Reflexionseigenschaften an den Tripel-Übergängen und innerhalb dieser Trippel unterschiedlich sind. Durch eine Blendenaufweitung kann eine größere Zahl von Trippeln erfasst und damit die Ortsauflösung reduziert werden.

Durch den erfindungsgemäßen, sehr variabel einstellbaren Detektor kann auch eine Reflexionslichtschranke durch gezieltes Einstellen des Detektors auf eine bestimmte Objektgröße konfiguriert werden. Beim Betrieb einer Reflexionslichtschranke ist das kleinste erkennbare Objekt von Reflektorgröße, eingestellter Empfindlichkeit und Öffnungswinkel des Empfangskanals abhängig. Durch eine variable Blendenverkleinerung wird der Öffnungswinkel des Empfängers verkleinert. Dadurch kann ein Sensor auf verschiedene Objektsituationen eingestellt und somit für die Erkennung auch kleiner Objekte konfiguriert werden.

Außerdem können Lichtsignale von statischen Objekten im Überwachungsbereich, insbesondere beim Einsatz des Sensors in einer Reflexionslichtschranke oder als Reflexionslichttaster, durch Ignorieren bestimmter Bereiche der Detektorgrundfläche unterdrückt werden. Ein störendes Objekt, das sich in einer statischen Position innerhalb oder am Rand des Erfassungsbereichs oder des Öffnungswinkels des Empfängers befindet, kann durch Ausblenden des entsprechenden Bereichs auf der Empfangsfläche unterdrückt werden. Beispiele hierfür sind Reflexe von spiegelnden Objekten oder Lichtpulse eines weiteren optischen Sensors.

Der erfindungsgemäße optoelektronische Sensor erlaubt auch eine vorteilhafte Alternative des erfindungsgemäßen Verfahrens, bei der mit Hilfe der einstellbaren Position und/oder Form der aktiven Fläche des Detektors eine auf den Sendestrahlengang bezogene Justierung des Nachweisstrahlengangs durchgeführt wird.

Insbesondere kann bei einer solchen Verfahrensvariante die aktive Fläche des Detektors so angepasst werden, dass eine Dejustage beim Montageprozess ausgeglichen wird.

Im mechanischen Aufbau und der Anordnung von optischen Sender- und Empfangselementen entstehen, bedingt durch mechanische Toleranzen, Abweichungen in der Überlappung der Öffnungswinkel von Sender und Empfänger. Durch eine Kalibrationsvorgang können die beiden Öffnungswinkel in Übereinstimmung gebracht und auf ein Mindestmaß reduziert werden. Dieser Einsatz ist sowohl bei optischen Sensoren mit koaxialer Optik, als auch bei Systemen mit getrennten Sende- und Empfangsoptiken möglich. Vorteil ist hierbei, dass dieser Kalibrierungs- oder Justierungsvorgang an einem komplett verschlossenen Gerät durchgeführt, beziehungsweise prinzipiell jederzeit wiederholt werden kann. Dadurch lassen sich auch Serienstreuungen reduzieren.

Bei einer Montage des Sensors, beispielsweise am Einsatzort, kann es aufgrund der mechanischen Einwirkungen auf das Sensorgehäuse zu Verstellungen oder Dejustagen der optischen Komponenten kommen. Beim erfindungsgemäßen Sensor können diese Dejustagen ausgeglichen werden, ohne dass das Gerät selbst geöffnet werden muss, einfach dadurch, dass die aktive Fläche des Detektors, also die Gesamtheit der für die Messung aktivierten Detektorbestandteile, gezielt verändert und angepasst wird, bis wieder weitgehend optimale Bedingungen erreicht sind.

Eine weitere besonders bevorzugte Ausgestaltung des erfindungsgemäßen ist dadurch gekennzeichnet, dass mit Hilfe des Detektors eine Funktionalität von mehreren Blenden sequenziell nachgebildet wird.

In DE 20 2006 003 841 U1 ist ein System bestehend aus zwei Empfangselementen beschrieben, über welche eine Plausibilitätsüberprüfung des Empfangssignals durchgeführt wird und damit in einer Reflexionslichtschranke eine Unterscheidung des empfangenen Lichts von einem Reflektor und eines diffus reflektierenden Objekts erfolgt. Durch den Einsatz einer elektronischen Blende können durch Umkonfiguration der Blendenbereiche und damit der Erfassungsbereiche die Funktionalität von zwei oder auch mehreren Empfangselementen nachgebildet werden. Dies kann bezüglich der Erfassungsbereiche sowohl überlappend oder auch nicht überlappend erfolgen. Beispielsweise kann eine sequenzielle Änderung und Anpassung der elektronischen Blende innerhalb von wenigen Mikrosekunden durchgeführt werden.

Mit Hilfe solcher Plausibilitätsüberprüfungen können Informationen über die Zielobjekte gewonnen werden, beispielsweise ergeben sich für spiegelnde Objekte sehr scharfe Übergänge in den Nachweissignalen.

Für Plausibilitätsüberprüfungen kann außerdem das Nachweissignal mit verschiedenen Blendenkonfigurationen des Empfangselements sequenziell abgetastet werden.

Unter einem sequenziellen Abtasten wird in diesem Zusammenhang das Durchführen von Messungen zeitlich nacheinander mit unterschiedlichen aktiven Flächen des Detektors verstanden, wobei erfindungsgemäß ein über die jeweilige aktive Fläche des Detektors integriertes Nachweissignal ausgegeben wird.

Für die hier beschriebenen Verfahrensvarianten können außerdem die optimalen. Blendenkonfigurationen dynamisch mit Hilfe eines Einlernprozesses ermittelt werden. Beispielsweise kann eine Einstellung des Detektors in Abhängigkeit von einer Entfernung und/oder der Form eines Zielobjekts durch einen solchen Einlernvorgang gefunden werden.

Der Begriff Licht soll in der vorliegenden Anmeldung nicht beschränkend auf den Wellenlängenbereich ausgelegt werden. Insbesondere können Quellen im sichtbaren und InfrarotBereich eingesetzt werden. Bei einer bevorzugten Variante sendet die Strahlungsquelle gepulstes Licht, insbesondere mit einem kleinen Puls/Pausen-Verhältnis, aus und der Detektor umfasst entsprechend Mittel, um Signale synchron zum ausgesendeten Licht zu empfangen. Auf diese Weise können Störsignale weiter reduziert werden.

Beispielsweise kann das Strahlungslicht auch moduliert werden und das Signal des Detektors kann durch einen entsprechenden Bandpassfilter geleitet werden, so dass nur Frequenzanteile des Nachweissignals mit der Modulationsfrequenz des Sendelichts nachgewiesen werden. Bei einfachen Varianten wird nur das während der Pulszeiten, gegebenenfalls verschoben um Laufzeiten der Lichtimpulse, nachgewiesene Detektionssignal ausgewertet.

Weitere Vorteile und Merkmale der Erfindung werden nachstehend mit Bezug auf die beigefügten schematischen Figuren erläutert. Hierin zeigen:
- Fig. 1: eine schematische Darstellung eines erfin- dungsgemäßen optoelektronischen Sensors;
- Fig. 2: einen Detektor aus dem Stand der Technik;
- Fig. 3: eine schematische Darstellung eines ersten Beispiels eines Detektors eines erfindungsge- mäßen Sensors;
- Figuren 4 bis 6: Zustände des Detektors aus Fig. 3;
- Fig. 7: eine schematische Darstellung eines Detektors aus dem Stand der Technik;
- Fig. 8: ein weiteres Beispiel eines Detektors eines Sensors, der nicht zur Erfindung gehört ;
- Figuren 9 bis 11: Zustände und Betriebsmöglichkeiten für den Detektor aus Fig. 8.

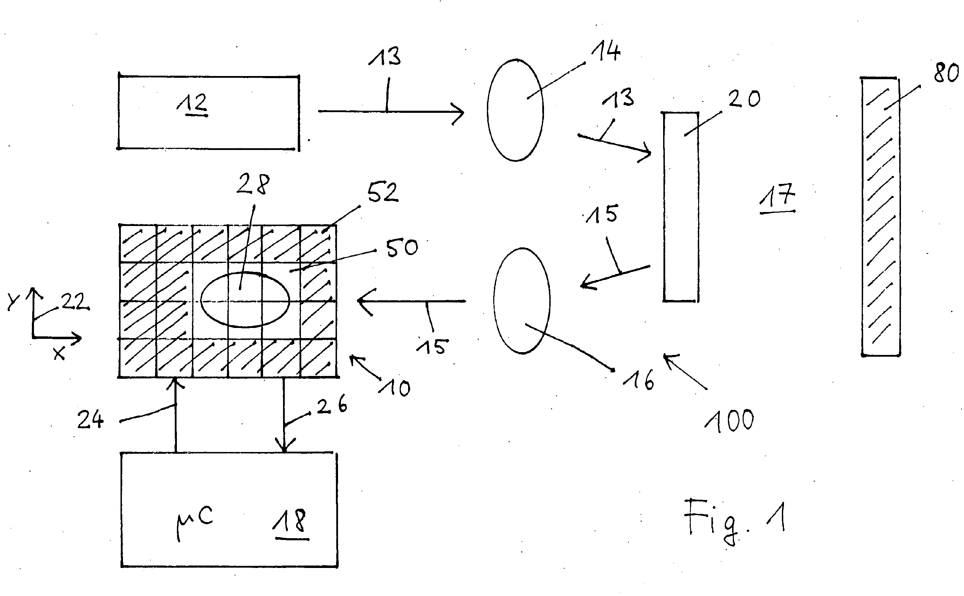

Der in Figur 1 schematisch dargestellte erfindungsgemäße optoelektronische Sensor 100 weist als wesentliche Komponenten eine Strahlungsquelle 12, eine Sendeoptik 14, eine Detektoroptik 16, einen Detektor 10 und eine Steuereinheit 18 auf.

Die Strahlungsquelle 12 sendet Licht 13, beispielsweise sichtbares oder Infrarotlicht, über die Sendeoptik 14 in einen Überwachungsbereich 17. Dort kann das Licht auf ein nachzuweisendes Zielobjekt 20 oder, für den Fall einer Reflexionslichtschranke, auf einen Reflektor 80 treffen.

Von dem Zielobjekt 20 und/oder dem Reflektor 80 gestreutes und/oder reflektiertes Licht 15 gelangt über die Detektoroptik 16 auf den erfindungsgemäßen Detektor 10, der hier schematisch als schachbrettartiges Raster dargestellt ist.

Auf der Detektorfläche erzeugt das einfallende Licht einen Leuchtfleck 28, dessen Form und Position von dem konkreten optischen Aufbau und von der Entfernung des Zielobjekts 20 oder des Reflektors 80 vom Sensor 100 abhängen. Um ein möglichst gutes Nutz-Störsignal-Verhältnis zu erzielen, sollte eine aktive Fläche 50 des Detektors 10 möglichst weitgehend mit dem Leuchtfleck 28 zusammenfallen.

Die erfindungsgemäße Lösung besteht darin, bei dem Detektor 10 Mittel vorzusehen, die ein Anpassen der aktiven Fläche 50 nach Form und Position innerhalb einer Detektorgrundfläche erlauben. Im Übrigen wird aber die aktive Fläche 50 des Detektors 10 im Prinzip wie ein einziger Detektor behandelt, so dass im Wesentlichen nur ein einziges Nachweissignal ausgelesen werden muss. Mit dem Bezugszeichen 52 ist in Figur 1 ein nicht aktiver Bereich des Detektors gekennzeichnet.

Als Mittel zum Einstellen von Form und Position der aktiven Fläche 50 kann beispielsweise eine elektronisch einstellbare Blende, etwa ein LCD-Array, vorgesehen sein. Bei den im Folgenden beschriebenen Varianten wird die Einstellbarkeit von Form und Position der aktiven Fläche durch einen in x- und y-Richtung in Segmente unterteilten Detektor realisiert. Ein Koordinatensystem 22 ist in Figur 1 ebenfalls schematisch angedeutet.

Die Ansteuerung des Detektors 10 kann über Steuerleitungen 24 einer Steuereinheit 18 erfolgen, der auch das Nachweissignal 26 zur. Auswertung zugeführt wird. Bei der Steuereinheit 18 kann es sich um einen Mikrokontroller, einen digitalen Signal-Prozessor, eine programmierbare Logikschaltung oder eine kundenspezifische integrierte Schaltung handeln, die beispielsweise auch für Einlernvorgänge die entsprechenden Auswertungen durchführen.

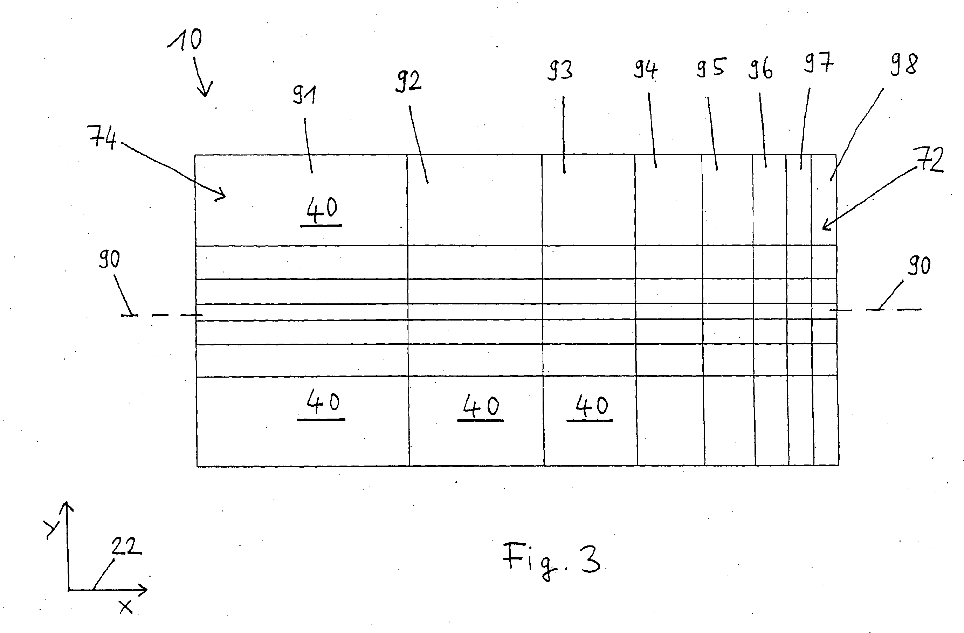

Ein erstes Beispiel eines Detektors 10 für einen erfindungsgemäßen Sensor wird nachstehend mit Bezug auf die Figuren 3 bis 6 erläutert.

Äquivalente Komponenten sind in allen Figuren mit denselben Bezugszeichen versehen.

Die Struktur des Detektors 10 ist in Figur 3 gezeigt. Der Detektor 10 weist insgesamt 56 rasterförmig angeordnete Detektorsegmente 40 unterschiedlicher Größe auf. Es handelt sich bei dem gezeigten Detektor 10 um eine für Triangulationsanwendungen optimierte Variante, weshalb die Ausdehnung der Detektorsegmente in x-Richtung von links nach rechts abnimmt. Der in Figur 3 rechte Bereich 72 des Detektors 10 gehört zum Fernfeld, der linke Bereich 74 entsprechend zum Nahfeld.

Neben der Unterteilung des Detektors 10 in Detektorsegmente 40, die eine unterschiedliche Breite in x-Richtung-aufweisen, ist der Detektor 10 auch in y-Richtung segmentiert. Die einzelnen Detektorsegmente 40 weisen jeweils auch eine unterschiedliche Ausdehnung in y-Richtung, also eine unterschiedliche Höhe, auf. Die Detektorsegmente 40 sind symmetrisch zu einer Mittenachse 90 gebildet, wobei die Höhe der Detektorsegmente 40 mit zunehmendem Abstand von der Mittenachse 90 zunimmt. Alle in einem bestimmten x-Bereich liegenden Detektorsegmente 40 bilden ein Pixel, dessen Höhe durch gezieltes Verschalten der entsprechenden Detektorsegmente 40 eingestellt werden kann. Bevorzugt erfolgt dieses Zusammenschalten der Detektorsegmente 40 eines Pixels symmetrisch zur Mittenachse 90, das heißt es werden entweder ein, drei oder fünf oder alle sieben Detektorsegmente 40 eines Pixels zusammengeschaltet.

Bei der in Figur 3 gezeigten Variante sind insgesamt acht Pixel mit Bezugszeichen 91 bis 98 vorgesehen.

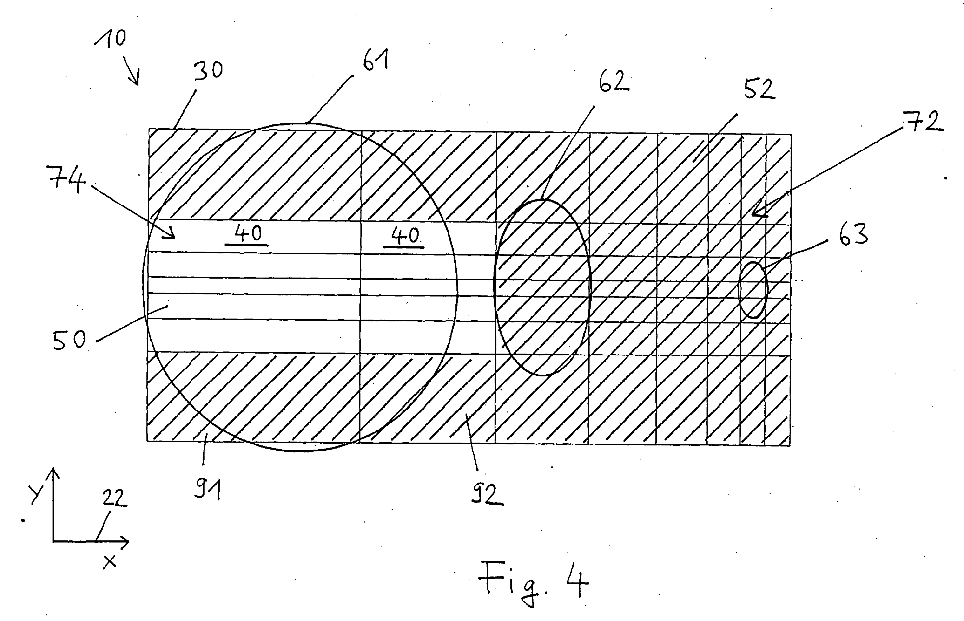

Ein solcher gezielt einstellbarer Detektor 10, der vereinfachend selbst als elektronische Blende bezeichnet werden kann, kann dazu dienen, für einen gewählten Tastabstand bei einem Triangulationssensor die einzelnen Sensorelemente in ihrer Höhe an die jeweils resultierende Lichtfleckgeometrie auf dem Empfänger optimal anzupassen. Die bei solchen Anwendungen typischen großen Störlichtpegel können auf diese Weise reduziert werden. Dies wird mit Bezug auf die Figuren 4 bis 6 näher erläutert.

Eine erste Messsituation ist in Figur 4 veranschaulicht. Dort fällt Licht in einem Leuchtfleck 61 auf den zum Nahbereich gehörenden linken Bereich 74 des Detektors 10. Um den Bereich des Leuchtflecks 61 mit dem Detektor 10 möglichst gut zu erfassen, werden für die Pixel 91 und 92 jeweils die fünf innen liegenden Detektorsegmente 40 zu einer aktiven Fläche 50 zusammengeschaltet. Alternativ könnten auch alle sieben Segmente des Pixels 91 die aktive Fläche 50 bilden. Der übrige nicht aktive Bereich 52 des Detektors 10 innerhalb der Detektorgrundfläche, die durch eine Außenkontur 30 angedeutet ist, ist schraffiert dargestellt.

Ebenfalls dargestellte Leuchtflecke 62 und 63, die zu einem mittleren beziehungsweise zum Fernfeld gehören, würden bei der in Figur 4 gezeigten Konfiguration nicht nachgewiesen werden.

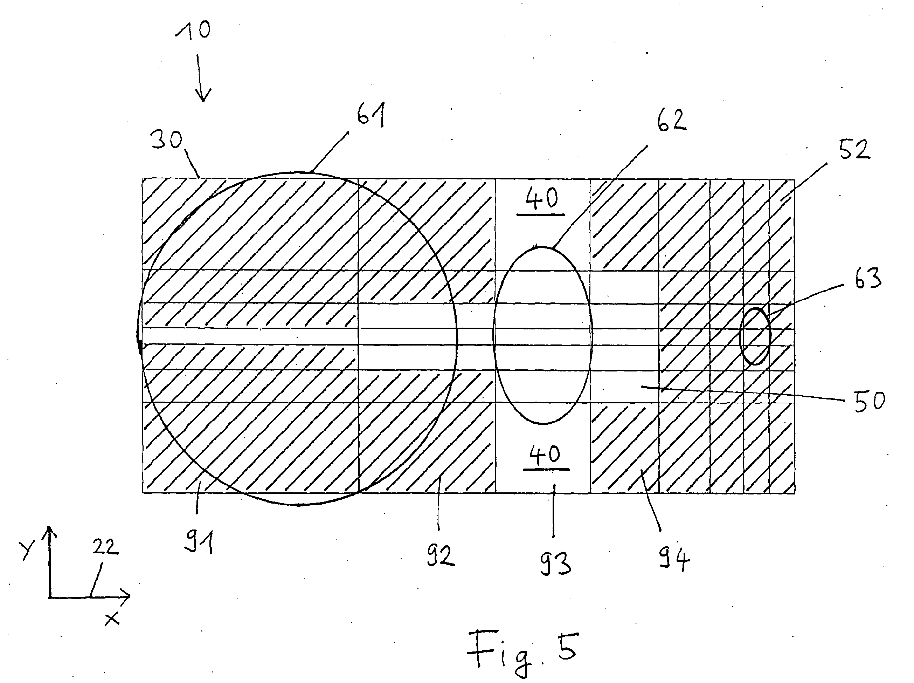

Eine zweite Situation ist in Figur 5 gezeigt. Dort ist der Detektor 10 auf den mittleren Leuchtfleck 62 optimiert. Hierzu sind von Pixel 91 nur das innere, von Pixel 92 die drei innen liegenden, von Pixel 93 alle sieben und von Pixel 94 die fünf innen liegenden Detektorsegmente 40 zur aktiven Fläche 50 zusammengeschaltet.

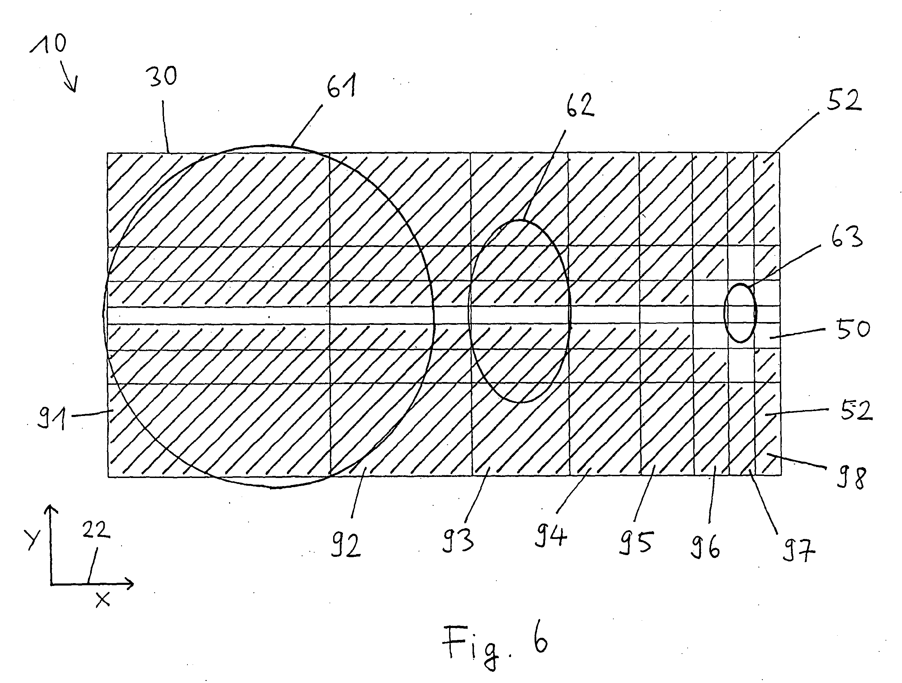

Die entsprechende Konfiguration für einen von einem Objekt im Fernfeld generierten Leuchtfleck 63 schließlich ist in Figur 6 gezeigt. Die aktive Fläche 50 besteht dort aus den inneren Detektorsegmenten 40 der Pixel 91 bis 95, den drei innen liegenden Detektorsegmenten 40 der Pixel 96 und 98 sowie den fünf innen liegenden Detektorsegmenten 40 des Pixels 97. Der Leuchtfleck 63 wird so vollständig erfasst und alle anderen Bereiche werden ausgeblendet.

Ein weiteres Beispiel eines Detektors 10 für einen erfindungsgemäßen optoelektronischen Sensor und Anwendungen hiervon werden mit Bezug auf die Figuren 8 bis 11 beschrieben.

Figur 8 zeigt einen Detektor 10, der aus insgesamt zwanzig gleichgroßen Detektorsegmenten 40 besteht. Die Detektorsegmente 40 sind in vier Reihen zu je fünf Segmenten schachbrettartig angeordnet. Der Detektor 10 aus Figur 8 ist insbesondere für Anwendungen in Reflexionslichtschranken oder Reflexionslichttastern geeignet. In der in Figur 8 gezeigten Situation sind Detektorsegmente S23, S24, S33 und S34 zu einer aktiven Fläche 50 zusammengeschaltet. Form und Position dieser aktiven Fläche 50 sind gezielt so gewählt, dass ein Leuchtfleck 44, der beispielsweise von einem weit entfernt positionierten Reflektor stammen kann, auf die aktive Fläche 50 fällt und darüber hinaus aber im Wesentlichen kein Licht detektiert wird.

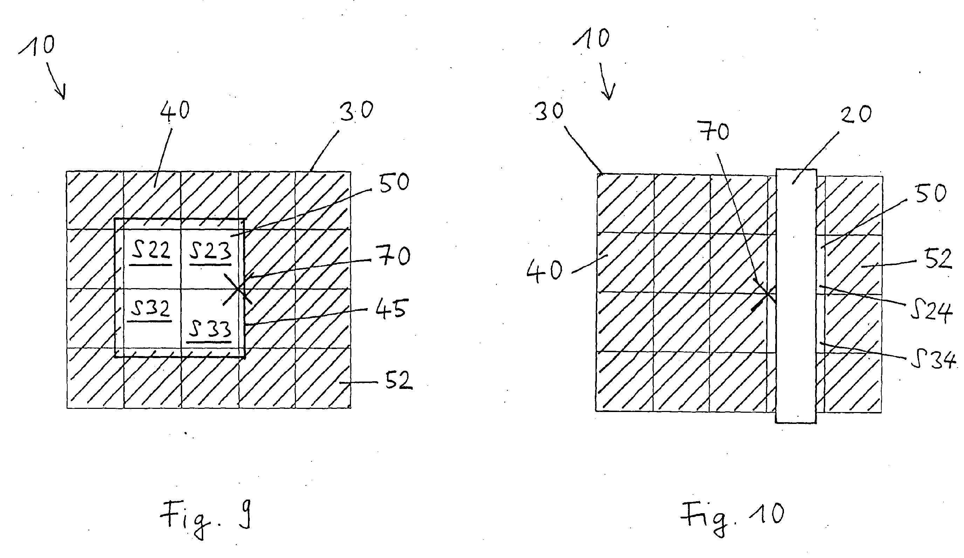

Durch ein Kreuz 70 angedeutet ist die optische Achse des Systems, wobei die Situation in Figur 8 gerade einem Leuchtfleck 44 aus dem Fernfeld entspricht, das heißt die optische Achse 70 liegt zentrisch zum Leuchtfleck 44. Größe und Position des Leuchtflecks variiert bei Reflexionslichtschranken in Abhängigkeit vom Abstand des Reflektors zum Sensor und der Größe des Reflektors. Auch für diese Situation gestattet der erfindungsgemäße optoelektronische Sensor eine hervorragende Anpassung, was im Zusammenhang mit Figur 9 erläutert wird.

Die optische Achse liegt dort unverändert an derselben Position wie in Figur 8. Der Leuchtfleck 45 jedoch befindet sich aufgrund geringeren Abstands des Reflektors vom Sensor nunmehr etwas weiter links. Um den Leuchtfleck 45 bestmöglich zu erfassen, Störlicht aber zu unterdrücken, werden deshalb in Figur 9, abweichend von Figur 8, die Detektorsegmente S22, S23, S32 und S33 zur aktiven Fläche zusammengeschaltet. Durch Toleranzen bei der Montage kann der Leuchtfleck ebenfalls abweichend von der Idealposition nach Figur 8 liegen. Diese Dejustage kann mit einer alternativen Blendenkonfiguration wie nach Figur 9 ausgeglichen werden.

Der Detektor 10 erlaubt auch eine Variation der Ortsauflösung. Beim Betrieb einer Reflexionslichtschranke ist das kleinste erkennbare Objekt von Reflektorgröße, eingestellter Empfindlichkeit und Öffnungswinkel des Empfangskanals abhängig. Durch eine variable Blendenverkleinerung wird der Öffnungswinkel des Empfängers verkleinert, wodurch ein Sensor auf verschiedene Objektsituationen eingestellt und damit für die Erkennung kleiner Objekte konfiguriert werden kann.

Bei dem in Figur 10 gezeigten Detektor 10 sind nur die Detektorsegmente S24 und S34 zur aktiven Fläche 50 zusammengeschaltet, die hier also schmaler ist als in den Figuren 8 und 9. Mit einem so konfigurierten Detektor 10 kann auch ein schmales Zielobjekt 20 nachgewiesen, die Ortsauflösung also erhöht werden.

Schließlich können quasi-statische Reflexe oder Lichteinstrahlungen bei dem erfindungsgemäßen optoelektronischen Sensor ausgeblendet werden. Ein störendes Objekt, das sich in einer statischen Position innerhalb oder am Rand des Erfassungsbereichs oder Öffnungswinkels des Empfängers befindet, kann durch Ausblenden des entsprechenden Bereichs auf der Empfangsfläche unterdrückt werden. Solche quasi-statischen Lichteinstrahlungen können beispielsweise Reflexionen von spiegelnden Objekten oder Lichtpulse von weiteren optischen Sensoren sein.

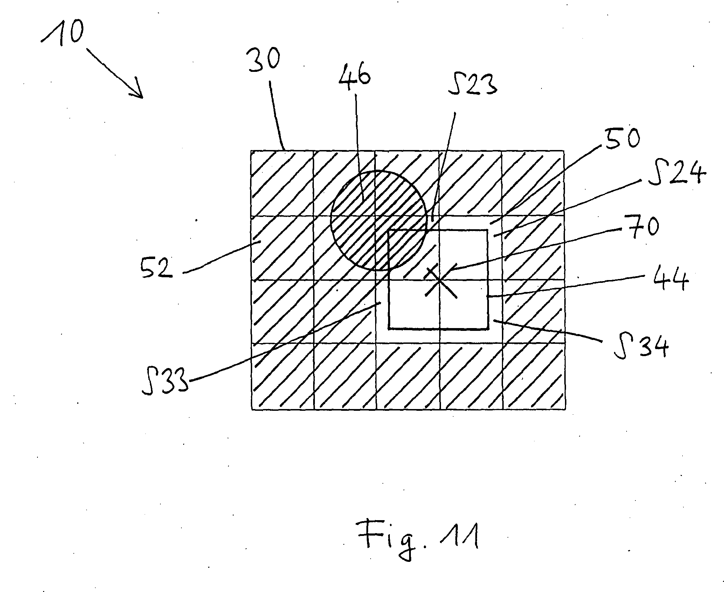

Dies ist in Figur 11 schematisch dargestellt. Dort fällt ein quasi-statischer Leuchtfleck 46 auf den Detektor 10 und überlappt teilweise mit einem von einem nachzuweisenden Zielobjekt generierten Leuchtfleck 44. Um nun die Strahlung des Leuchtflecks 46 auszublenden, werden nur die Segmente S24, S33 und S34 zur aktiven Fläche 50 zusammengeschaltet. Im Unterschied zur Situation in Figur 8 wird jedoch das Segment S23 nicht aktiviert. Die störenden quasi-statischen Lichteinstrahlungen des Leuchtflecks 46 werden auf diese Weise unterdrückt.

Mit der vorliegenden Erfindung werden ein optoelektronischer Sensor und ein Verfahren zu dessen Betrieb bereitgestellt, mit denen das Nutz-Störsignal-Verhältnis erheblich verbessert werden kann. Außerdem wird ein unaufwändiger Betrieb realisiert und die Erfindung kann bei einer Vielzahl von Geräten, insbesondere bei Triangulationssensoren, Reflexionslichtschranken und Reflexionslichttastern mit Erfolg eingesetzt werden.

## Patentansprüche

1. Optoelektronischer Sensor
(a) mit einer Strahlungsquelle (12) zum Aussenden von Licht (13) in einen Überwachungsbereich (17) und
(b) mit einem Detektor (10) zum Nachweis von von einem nachzuweisenden Zielobjekt (20) und/oder einem Reflektor (80) reflektiertem und/oder gestreutem Licht (15),
(c) wobei der Detektor (10) eine Mehrzahl von Detektorsegmenten (40) aufweist, durch deren Gesamtheit eine Detektorgrundfläche (30) gebildet ist,
(d) wobei der Detektor (10) in einer x- Richtung und in einer quer dazu verlaufenden y-Richtung segmentiert ist und die Detektorsegmente (40) symmetrisch bezüglich einer in x-Richtung verlaufenden Mittenachse (90) des Detektors gebildet sind,
(e) wobei der Detektor (10) den Detektorsegmenten (40) zugeordnete Schaltelemente aufweist, mit welchen die Detektorsegmente (40) zu einer aktiven Fläche (50) zusammengeschaltet oder von der aktiven Fläche (50) weggeschaltet werden können,
(f) wobei eine Position und zweidimensionale Form der aktiven Fläche (50) innerhalb der Detektorgrundfläche (30) variabel einstellbar ist und
(g) wobei vom Detektor (10) ein über die aktive Fläche (50) integriertes Nachweissignal ausgebbar ist,
(h) wobei die Detektorsegmente (40), die einander bezüglich der Mittenachse (90) des Detektors (10) symmetrisch entsprechen, jeweils paarweise zusammenschaltbar sind und
(i) wobei eine Segmenthöhe in y-Richtung der Detektorsegmente (40) mit zunehmendem Abstand zu der Mittenachse (90) zunehmend größer ist.

2. Sensor nach Anspruch 1,
**dadurch gekennzeichnet,**
**dass** zum Einstellen der aktiven Fläche (50) unmittelbar vor der Detektorgrundfläche (30) eine elektronisch steuerbare Blende vorhanden ist.

3. Sensor nach einem der Ansprüche 1 oder 2,
**dadurch gekennzeichnet,**
**dass** die Schaltelemente auf oder an demselben Chip wie die Detektorsegmente (40), insbesondere monolithisch, angeordnet sind.

4. Sensor nach einem der Ansprüche 1 bis 3,
**dadurch gekennzeichnet,**
**dass** der Detektor (10) eine rechteckige Detektorgrundfläche (30) aufweist.

5. Sensor nach einem der Ansprüche 1 bis 4,
**dadurch gekennzeichnet,**
**dass** die Detektorsegmente (40) unterschiedlich groß sind.

6. Sensor nach einem der Ansprüche 1 bis 5,
**dadurch gekennzeichnet,**
**dass** die Detektorsegmente (40) in einem rechtwinkligen, insbesondere schachbrettartigen, Raster angeordnet sind.

7. Sensor nach einem der Ansprüche 1 bis 6,
**dadurch gekennzeichnet,**
**dass** für den Einsatz als Triangulationssensor die Detektorsegmente (40) für den Bereich eines Fernfelds dichter gerastert sind als für den Bereich eines Nahfelds.

8. Sensor nach einem der Ansprüche 1 bis 7,
**dadurch gekennzeichnet,**
**dass** die Detektorsegmente (40) in Richtung der Mittenachse (90) jeweils in eine Mehrzahl von Untersegmenten unterteilt sind.

9. Sensor nach einem der Ansprüche 1 bis 8,
**dadurch gekennzeichnet,**
**dass** alle Untersegmente eines Detektorsegments (40) dieselbe Segmenthöhe aufweisen.

10. Sensor nach einem der Ansprüche 1 bis 9,
**dadurch gekennzeichnet,**
**dass** eine Sendeoptik (14) und eine Empfangsoptik (16) gemeinsame optische Komponenten aufweisen und
**dass** ein Strahlteiler zum Trennen eines Sendestrahlengangs und eines Detektorstrahlengangs vorhanden ist.

11. Sensor nach einem der Ansprüche 1 bis 10,
**dadurch gekennzeichnet,**
**dass** die Strahlungsquelle (22) gepulstes Licht, insbesondere mit einem kleinen Puls/Pausen-Verhältnis, aussendet und
**dass** der Detektor Mittel umfasst zum Empfangen der Signale synchron zum ausgesendeten Licht.

12. Verfahren zum Betrieb eines optoelektronischen Sensors nach einem der Ansprüche 1 bis 11,
bei dem die Strahlungsquelle (12) Licht (13) in den Überwachungsbereich (17) aussendet und
bei dem von einem nachzuweisenden Zielobjekt (20) und/oder einem Reflektor (80) reflektiertes und/oder gestreutes Licht (15) von dem Detektor (10) nachgewiesen wird,
bei dem die Position und zweidimensionale Form der aktiven Fläche (50) des Detektors (10) innerhalb der Detektorgrundfläche (30) gezielt eingestellt wird, bei dem der Detektor (10) ein über die aktive Fläche (50) integriertes Nachweissignal ausgibt, und
bei dem die Detektorsegmente (40), die einander bezüglich der Mittenachse (90) des Detektors (10) symmetrisch entsprechen, jeweils paarweise zusammengeschaltet werden.

13. Verfahren nach Anspruch 12,
**dadurch gekennzeichnet,**
**dass** eine Einstellung des Detektors (10) in Abhängigkeit von einer Entfernung und/oder Form eines Zielobjekts (20) durch einen Einlernvorgang ermittelt wird.

14. Verfahren nach Anspruch 12 oder 13,
**dadurch gekennzeichnet,**
**dass** verschiedene Positionen und/oder Formen der aktiven Fläche (50) eingestellt werden und
**dass** das Nachweissignal des Detektors (10) sequentiell für die verschiedenen Positionen und/oder Formen der aktiven Fläche (50) abgetastet wird.

15. Verfahren nach einem der Ansprüche 12 bis 14,
**dadurch gekennzeichnet,**
**dass** mit Hilfe des Detektors (10) eine Funktionalität von mehreren Blenden sequentiell nachgebildet wird.

16. Verfahren nach einem der Ansprüche 12 bis 15,
**dadurch gekennzeichnet,**
**dass** mit Hilfe der einstellbaren Position und/oder Form der aktiven Fläche (50) des Detektors (10) eine auf den Sendestrahlengang bezogene Justierung des Nachweisstrahlengangs durchgeführt wird.

17. Verfahren nach einem der Ansprüche 12 bis 16,
**dadurch gekennzeichnet,**
**dass** Lichtsignale (46) von statischen Objekten im Überwachungsbereich, insbesondere beim Einsatz des Sensors (100) in einer Reflexionslichtschranke oder als Reflexionslichttaster, durch Ausblenden bestimmter Bereiche der Detektorgrundfläche (30) unterdrückt werden.

18. Verfahren nach einem der Ansprüche 12 bis 17,
**dadurch gekennzeichnet,**
**dass** die Reflexionslichtschranke durch gezieltes Einstellen des Detektors (10) auf eine bestimmte Objektgröße konfiguriert wird.

19. Verfahren nach einem der Ansprüche 12 bis 18,
**dadurch gekennzeichnet,**
**dass** für den Einsatz des Sensors (100) bei einer Reflexionslichtschranke durch gezielte Wahl von Form und Position der aktiven Fläche (50) des Detektors (10) die Optik für einen bestimmten Abstand eines Reflektors (80) eingestellt wird.

20. Verfahren nach einem der Ansprüche 12 bis 19,
**dadurch gekennzeichnet,**
**dass** durch Anpassen von Position und/oder Form der aktiven Fläche (50) des Detektors (10) eine Dejustage beim Montageprozess ausgeglichen wird.

21. Verfahren nach einem der Ansprüche 12 bis 20,
**dadurch gekennzeichnet,**
**dass** für den Einsatz des Sensors (100) als Triangulationssensor durch gezielte Wahl von Form und Position, der aktiven Fläche (50) des Detektors (10) eine Tastweite eingestellt wird.

22. Verfahren nach einem der Ansprüche 12 bis 21,
**dadurch gekennezeichnet,**
dass die Strahlungsquelle (22) gepulstes Licht, insbesondere mit einem kleinen Puls/Pausen-Verhältnis, aussendet, und mit dem Detektor (10) die Signale synchron zum ausgesendeten Licht empfangen werden.

## Claims

1. An opto-electronic sensor, comprising
(a) a radiation source (12) for the transmission of light (13) to a monitored region (17) and
(b) a detector (10) for detecting light (15) reflected and/or scattered by a target object to be detected (20) and/or by a reflector (80),
(c) wherein said detector (10) comprises a plurality of detector segments (40) which together form a detector base surface (30),
(d) wherein said detector (10) is segmented in an X direction and in a Y direction extending at right angles thereto, and said detector segments (40) are symmetrically shaped about a center axis (90) of said detector, which center axis extends in the X direction,
(e) wherein said detector (10) comprises circuit elements which are assigned to said detector segments (40) and by means of which said detector segments (40) can be interconnected to form an active surface (50) or can be cut off from said active surface (50),
(f) wherein a position and a two-dimensional shape of said active surface (50) can be varied within said detector base surface (30),
(g) wherein a detection signal integrated across said active surface (50) can be outputted by said detector (10),
(h) wherein said detector segments (40), which are symmetrical to the each other about said center axis (90) of said detector (10), are capable of being interconnected in pairs, and
(i) wherein a height of each detector segment (40) in y-direction increases with increasing distance from said center axis (90).

2. The sensor as defined in claim 1,
**characterized in that**
for the purpose of adjusting said active surface (50), an electronically controllable diaphragm is provided directly in front of said detector base surface (30).

3. The sensor as defined in claim 1 or claim 2,
**characterized in that**
said circuit elements are disposed on or against the same chip as the detector segments (40), more particularly monolithically.

4. The sensor as defined in any one of claims 1 to 3,
**characterized in that**
said detector (10) has a rectangular detector base surface (30).

5. The sensor as defined in any one of claims 1 to 4,
**characterized in that**
said detector segments (40) vary in size.

6. The sensor as defined in any one of claims 1 to 5,
**characterized in that**
said detector segments (40) are arranged in a rectangular, more particularly chequered, raster.

7. The sensor as defined in any one of claims 1 to 6,
**characterized in that**,
for use as a triangulation sensor, said detector segments (40) are more closely rastered for detection of a remote region than for detection of a close region.

8. The sensor as defined in any one of claims 1 to 7,
**characterized in that**
said detector segments (40) directed toward said center axis (90) are each subdivided into a plurality of subsegments.

9. The sensor as defined in any one of claims 1 to 8,
**characterized in that**
all of said subsegments of a detector segment (40) are of the same segment height.

10. The sensor as defined in any one of claims 1 to 9,
**characterized in that**
a transmitter optical system (14) and a receiver optical system (16) share common optical components, and
that a beam splitter is provided for the purpose of separating a transmitting optical path and a detecting optical path.

11. The sensor as defined in any one of claims 1 to 10,
**characterized in that**
the radiation source (22) emits pulsed light, more particularly pulsed light showing a low pulse/pause ratio, and
that said detector comprises means for the reception of the signals synchronously to the emitted light.

12. A method for operating an opto-electronic sensor as defined in any one of claims 1 to 11,
wherein said radiation source (12) emits light (13) to said monitored region (17) and
wherein light (15) reflected and/or scattered by a target object to be detected (20) and/or by a reflector (80) is detected by said detector (10),
wherein the position and two-dimensional shape of said active surface (50) of said detector (10) is selectively adjusted within said detector base surface (30) and said detector (10) generates a detection signal which is integrated across said active surface (50) and
wherein said detector segments (40), which are symmetrical to each other about said center axis (90) of said detector (10), are interconnected in pairs.

13. The method as defined in claim 12,
**characterized in that**
the degree of adjustment of said detector (10) required to allow for the distance and/or shape of a target object (20) is determined in a teach-in step.

14. The method as defined in claim 12 or claim 13,
**characterized in that**
various positions and/or shapes of said active surface (50) are adjusted and that the detection signal of said detector (10) is sequentially scanned for the various positions and/or shapes of said active surface (50).

15. The method as defined in any one of claims 12 to 14,
**characterized in that**
with the aid of said detector (10), a functionality of a plurality of diaphragms is sequentially reproduced.

16. The method as defined in any one of claims 12 to 15,
**characterized in that**
with the aid of the adjustable position and/or shape of said active surface (50) of said detector (10), an adjustment of the detecting optical path is carried out on the basis of the transmitting optical path.

17. The method as defined in any one of claims 12 to 16,
**characterized in that**
light signals (46) caused by static objects in said monitored region, particularly when said sensor (100) is used in a reflex light barrier or as a reflex light feeler, are suppressed by blanking out certain regions of said detector base surface (30).

18. The method as defined in any one of claims 12 to 17,
**characterized in that**
said reflex light barrier is configured to accommodate a certain object size by selective adjustment of said detector (10).

19. The method as defined in any one of claims 12 to 18,
**characterized in that**
when said sensor (100) is used for a reflex light barrier by selective choice of the shape and position of said active surface (50) of said detector (10), the optical system is adjusted for a specific distance of a reflector (80).

20. The method as defined in any one of claims 12 to 19,
**characterized in that**
the adaptation of the position and/or shape of said active surface (50) of said detector (10) compensates for any misalignment incurred during installation.

21. The method as defined in any one of claims 12 to 20,
**characterized in that**
when said sensor (100) is used as a triangulation sensor by the selective choice of the shape and position of the active surface (50) of said detector (10), a scanning range is set.

22. The method as defined in any one of claims 12 to 21,
**characterized in that**
the radiation source (22) emits pulsed light, more particularly pulsed light showing a low pulse/pause ratio, and the signals are received by said detector (10) synchronously to the emitted light.

## Revendications

1. Capteur optoélectronique
(a) avec une source (12) de rayonnement pour émettre de la lumière (13) dans une zone de surveillance (17) et
(b) avec un détecteur (10) pour détecter la lumière réfléchie (15) et/ou diffusée par un objet cible (20) à détecter et/ou par un réflecteur (80),
(c) dans lequel le détecteur (10) présente une pluralité de segments détecteurs (40) dont la globalité forme une surface (30) de base de détecteur,
(d) dans lequel le détecteur (10) est segmenté dans une direction x et dans une direction y perpendiculaire à celle-ci, et les segments détecteurs (40) sont formés symétriquement par rapport à un axe médian (90) du détecteur s'étendant dans la direction x,
(e) dans lequel le détecteur (10) comprend des éléments de commutation associés aux segments détecteurs (40), avec lesquels les segments détecteurs (40) peuvent être ajoutés à une surface active (50) ou retirés de la surface active (50),
(f) dans lequel une position et une forme bidimensionnelle de la surface active (50) sont réglables de manière variable à l'intérieur de la surface (30) de base du détecteur, et
(g) dans lequel un signal de détection intégré sur la surface active (50) peut être délivré par le détecteur (10),
(h) dans lequel les segments détecteurs (10) qui se correspondent mutuellement par symétrie par rapport à l'axe médian (90) du détecteur (10) peuvent être regroupés par paires respectives, et
(i) dans lequel une hauteur de segment des segments détecteurs (40) dans la direction y augmente progressivement quand la distance depuis l'axe médian (90) augmente.

2. Capteur selon la revendication 1,
***caractérisé***
***en ce que****,* pour régler la surface active (50), un diaphragme à commande électronique est placé directement devant la surface (30) de base du détecteur.

3. Capteur selon la revendication 1 ou 2,
***caractérisé***
**en ce *que*** les éléments de commutation sont placés sur ou contre la même puce que les segments détecteurs (40), en particulier de manière monolithique.

4. Capteur selon l'une quelconque des revendications 1 à 3,
***caractérisé***
***en ce que*** le détecteur (10) comporte une surface (30) de base rectangulaire de détecteur.

5. Capteur selon l'une quelconque des revendications 1 à 4,
***caractérisé***
***en ce que*** les segments détecteurs (40) sont de différentes tailles.

6. Capteur selon l'une quelconque des revendications 1 à 5,
***caractérisé***
***en ce que*** les segments détecteurs (40) sont placés dans un réseau rectangulaire, en particulier en damier.

7. Capteur selon l'une quelconque des revendications 1 à 6,
***caractérisé***
***en ce que****,* pour une utilisation comme capteur de triangulation, les segments détecteurs (40) sont plus resserrés pour le domaine d'un champ proche que pour le domaine d'un champ lointain.

8. Capteur selon l'une quelconque des revendications 1 à 7,
***caractérisé***
***en ce que*** les segments détecteurs (40) sont chacun subdivisés en une pluralité de sous-segments dans la direction de l'axe médian (90).

9. Capteur selon l'une quelconque des revendications 1 à 8,
***caractérisé***
***en ce que*** tous les sous-segments d'un segment détecteur (40) présentent la même hauteur de segment.

10. Capteur selon l'une quelconque des revendications 1 à 9,
***caractérisé***
***en ce qu*'**une optique émettrice (14) et une optique réceptrice (16) comprennent des composants optiques communs, et
en ce qu'un diviseur de rayons est présent pour séparer un trajet des rayons d'émission et un trajet des rayons de détection.

11. Capteur selon l'une quelconque des revendications 1 à 10,
***caractérisé***
***en ce que*** la source (22) de rayonnement émet une lumière pulsée, en particulier avec un faible rapport impulsion/pause, et
***en ce que*** le détecteur comprend des moyens pour recevoir les signaux de manière synchrone avec la lumière émise.

12. Procédé de fonctionnement d'un capteur optoélectronique selon l'une quelconque des revendications 1 à 11,
dans lequel la source (12) de rayonnement émet de la lumière (13) dans la zone de surveillance (17) et
dans lequel la lumière réfléchie et/ou diffusée par un objet cible (20) à détecter et/ou par un réflecteur (80) est détectée par le détecteur (10),
dans lequel la position et la forme bidimensionnelle de la surface active (50) du détecteur (10) sont réglables de manière ciblée à l'intérieur de la surface (30) de base du détecteur,
dans lequel le détecteur (10) délivre un signal de détection intégré sur la surface active (50), et
dans lequel les segments détecteurs (40) qui se correspondent mutuellement par symétrie par rapport à l'axe médian (90) du détecteur (10) peuvent être regroupés par paires respectives.

13. Procédé selon la revendication 12,
***caractérisé***
***en ce qu*'**un réglage du détecteur (10) en fonction d'une distance et/ou d'une forme d'un objet cible (20) est déterminée par une opération d'apprentissage.

14. Procédé selon la revendication 12 ou 13,
***caractérisé***
***en ce que*** différentes positions et/ou formes de la surface active (50) sont réglées et
***en ce que*** le signal de détection du détecteur (10) est balayé séquentiellement pour les différentes positions et/ou formes de la surface active (50).

15. Procédé selon l'une quelconque des revendications 12 à 14,
***caractérisé***
***en ce qu'****à* l'aide du détecteur (10), une fonctionnalité de plusieurs diaphragmes est reproduite séquentiellement.

16. Procédé selon l'une quelconque des revendications 12 à 15,
***caractérisé***
***en ce qu'***à l'aide de la position et/ou de la forme réglable de la surface active (50) du détecteur (10), il est procédé à un réglage du trajet des rayons de détection par rapport au trajet des rayons d'émission.

17. Procédé selon l'une quelconque des revendications 12 à 16,
***caractérisé***
***en ce que*** des signaux lumineux (46) provenant d'objets statiques présents dans la zone de surveillance, en particulier si l'on utilise le capteur (100) dans une cellule photoélectrique à réflexion ou un capteur photoélectrique à réflexion, sont supprimés par extinction de certaines zones de la surface (30) de base du détecteur.

18. Procédé selon l'une quelconque des revendications 12 à 17,
***caractérisé***
***en ce que*** la cellule photoélectrique à réflexion est configurée par réglage ciblé du détecteur (10) pour une taille d'objet déterminée.

19. Procédé selon l'une quelconque des revendications 12 à 18,
***caractérisé***
***en ce que****,* pour l'utilisation du capteur (100) dans une cellule photoélectrique à réflexion, l'optique est réglée pour une certaine distance d'un réflecteur (80) par un choix ciblé de la forme et de la position de la surface active (50) du détecteur (10).

20. Procédé selon l'une quelconque des revendications 12 à 19,
***caractérisé***
***en ce que****,* par adaptation de la position et/ou de la forme de la surface active (50) du détecteur (10), une perte de réglage est compensée lors du processus de montage.

21. Procédé selon l'une quelconque des revendications 12 à 20,
***caractérisé***
***en ce que****,* pour l'utilisation du capteur (100) comme capteur de triangulation, une portée de détection est réglée par un choix ciblé de la forme et de la position de la surface active (50) du détecteur (10).

22. Procédé selon l'une quelconque des revendications 12 à 21,
***caractérisé***
***en ce que*** la source (22) de rayonnement émet une lumière pulsée, en particulier avec un faible rapport impulsion/pause, et, avec le détecteur (10), les signaux sont reçus de manière synchrone avec la lumière émise.
